# EUROPEAN PATENT SPECIFICATION

(11) **EP 3 728 836 B1**
(45) Date of publication and mention of the grant of the patent: **20.10.2021**
(21) Application number: 18842668.8
(22) Date of filing: 20.12.2018
(51) Int. Cl.: F03D 1/06

(54) **SECTIONAL BLADE FOR A WIND TURBINE, CONNECTION BEAM AND END RIB FOR THE SECTIONAL BLADE AND METHOD FOR MANUFACTURING THE CONNECTION BEAM AND THE END RIB**
SEGMENTIERTE SCHAUFEL FÜR EINE WINDENERGIEANLAGE, VERBINDUNGSSTREBE UND ENDRIPPE FÜR DIE SEGMENTIERTE SCHAUFEL UND VERFAHREN ZUR HERSTELLUNG DER VERBINDUNGSSTREBE UND ENDRIPPE
PALE À SECTIONS POUR ÉOLIENNE, POUTRE DE LIAISON ET NERVURE D'EXTRÉMITÉ POUR LA PALE À SECTION ET PROCÉDÉ DE FABRICATION DE LA POUTRE DE LIAISON ET DE LA NERVURE D'EXTRÉMITÉ

(30) Priority: 20.12.2017 NL 2020132
(43) Date of publication of application: 28.10.2020
(73) Proprietor: Viventus Holding B.v., 7609 RG Almelo (NL)
(72) Inventor: KUIPERS, Edo Johannes Hendrikus, 7609 ZC Almelo (NL); VOS, Hendrik Alfred, 49843 Halle (DE)
(74) Representative: Mink-Lindenburg, Charlotte Hildegard
(86) International application number: PCT/NL2018/050864
(87) International publication number: WO 2019/125159

(56) References cited:
- DE-A1-102009 040 515
- US-A1- 2010 143 143
- US-A1- 2012 027 608
- US-A1- 2014 234 116
- US-A1- 2015 003 991

## Description

The invention relates to a sectional blade for a wind turbine, comprising at least one blade section and a second blade section, which blade sections extend in opposite direction from a blade joint, wherein each blade section comprises a cavity in longitudinal direction, wherein the first blade section and second blade section are structurally connectable by at least one connecting beam or spar bridge which beam extends in the cavities of both blade sections.

A sectional blade according to the preamble of claim 1 is known from the European patent EP2288807.

The known sectional blade makes use of a gradual load transfer between the spar bridge and the main blade by tapering the materials in the spar bridge and the main blade.

It is an object of the invention to provide an alternative sectional blade according to the preamble, which has a different load transfer between the connection beam and the main blade.

The sectional blade according to the invention has the feature that each blade section is at its first end near the blade joint provided with a first end rib and each blade section is at its second end provided with a second end rib, wherein the first and second end rib each have a shape which cooperates with the blade section, the connecting beam is hollow at both ends and wherein the second end rib is arranged for receiving the hollow end of the connection beam for structurally connecting the connecting beam to the blade section. These features provides a better alternative to the connection of the blade section to the connection beam in the known sectional blade of EP2288807. In the known sectional blade of EP2288807 a bolted joint connection is used to connect a bulkhead in the blade section to a bulkhead in the connection beam. With these features, connection of the connection beam to the blade section is achieved by connecting the inner surface of the hollow end of the connection beam to the blade section. In this way the load on the connection is distributed over the inner surface.

A sectional blade according to the preamble of claim 1 is further also known from documents US2012/027608 and US2010/143143.

The sectional blade according to the invention has the characterizing feature that a rim is provided on the second end rib, which rim is arranged for durable attachment of the inner side of the hollow end of the connection beam and the first end rib is provided with an opening for partial passing of the connection beam, wherein the rim of the opening and the connection beam are arranged for durable attachment to each other. Possible durable attachment method are for instance bolting or bonding. In case the sectional blade comprises for example a first and second blade section, the corresponding four ribs and the connection beam will carry the bending moments acting on the sectional blade in operation edgewise and flatwise (Mx and My respectively), which bending moments are being introduced by the tip part of the sectional blade. The four ribs are able to carry these bending moments by creating a counter moment due to the distance of the two pair of ribs on the first blade section as well as the on the second blade section, exerting each a normal reaction force at each rib which is perpendicular to the sectional blade surface.

Preferably the rim and the connection beam fit together in a tightly manner. These features greatly enhance the distribution of the load at the rims of both end ribs.

In a more preferable embodiment of the sectional blade according to the invention, the second end ribs in adjacent blade sections are arranged for structurally connecting to each other by one or more rods, and the first end ribs are arranged for passing through each of the rods. These features provide a second load carrying path between the two blade sections, which can carry centrifugal loading and can also serve as a failsafe connection if the first load carrying path fails.

In another preferable embodiment of the sectional blade according to the invention, the sectional blade comprises squared tubes or channels, which are located between the first rib and second rib of each blade section. In normal operation these squared tubes or channels do not have a load carrying function, but serve as crushing zones in failsafe operation. In order to act as crushing zones, the tubes or channels are preferably made of glass fiber rods. More preferably, in order to further absorb crushing forces acting on the tubes or channels, these tubes or channels also comprises one or more crushing busses of metal. These tubes further function for handling/processing purposes.

Preferably the first and second end rib of a blade section are connected to each other by two flat webs, that are positioned substantially traverse to the longitudinal plane of the blade section and wherein the inner side of the webs form side walls of the cavity. These features provide a cavity with flat side walls, wherein a connection beam form fittingly can be inserted. Preferably the webs follow the outer shape of the top and bottom blade section.

The invention is also related to a connection beam for use in a sectional blade for a wind turbine. The connection beam according to the invention has the characterizing feature that the connection beam is formed by four beam-shaped longitudinal sides, which are structurally attached to each other. This allows for fast production of the connection beam, since the beam-shaped longitudinal sides or girders can be prefabricated and cut to the exact shape of the blade section. The type of material of the girders and strength of the girders can be adapted to the determined overall blade strength.

Preferably the longitudinal sides or girders are fabricated from UD fibers impregnated with resin, wherein the girders are interconnected by multi axial fibers impregnated with resin.

More specifically, the resin is of the type epoxy, polyester, vinylester, or PU and the fibers are of the type glass fiber or carbon fiber.

The connection beam preferably transfers the moment load from the tip of the sectional blade to the inner blade section by means of the end ribs.

The invention also relates to an end rib for application in a wind turbine blade according to the invention, with the characterizing feature that the end rib is composed of plates which are durable connected to each other.

The invention finally relates to a method for producing the end rib according to the invention, whereby the method comprises the following steps:
a). Splitting the overall design of the end rib in multiple layers with a predetermined thickness;
b). Cutting each layer from a predetermined sheet material;
c). Connected the layers to each other.

Preferably each layer is cut from a sheet material using water jet cutting techniques.

Preferably the sheet material is composed of one of the following materials: glass fiber with epoxy resin, polyester resin, vinyl ester resin or PU resin.

Preferably subsequent layers are connected to each other by bonding.

The invention will now be further elucidated with reference to the following figures, in which:
Figure 1 shows an isometric view of the preferred embodiment of the sectional blade according to the invention;
Figure 2 shows an isometric view of the sectional blade according to Figure 1, wherein the connecting beam is installed;
Figure 3 shows an exploded view of the sectional blade according to Figure 1 and Figure 2;
Figure 4A and 4B show the connection beam in more detail;
Figure 5 shows the second end rib in more detail;
Figure 6A;..;6J shows the different slices that are part of the modular second end rib;
Figure 7 shows a side view of the second end rib, wherein the layers or slices as shown in Figure 6A;..;6J are stacked together

The same components are designated in the different figures with the same reference numerals.

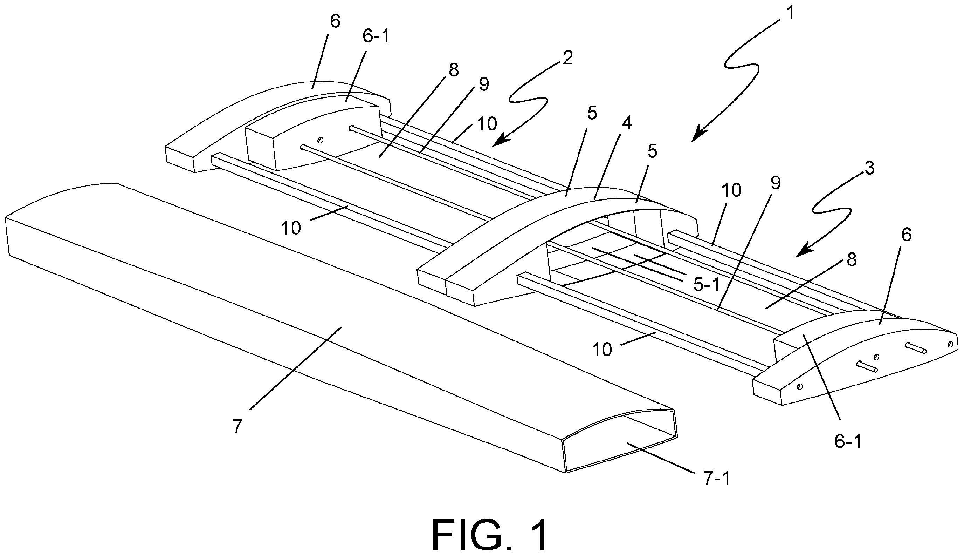

Figure 1 shows an isometric view of the preferred embodiment of the sectional blade 1 according to the invention. The sectional blade 1 comprises a first blade section 2 and a second blade section 3. Each blade section 2;3 has at its first end near the blade joint 4 a first rib 5. Also each blade section 2;3 has at its second end a second end rib 6. The first end ribs 5 and second end ribs 6 each have a shape that cooperates with the inner and outer shell of the blade section 2;3. The inner and outer shell of each blade section is omitted from this figure in order to show the above mentioned parts. First end ribs 5 are both provided with a recess or opening 5-1 for transfer of a connection beam 7. Second end ribs 6 are both provided with a rim 6-1, which rim 6-1 is arranged for attachment to the inner surface 7-1 of one end of the connection beam 7. The space between first end rib 5 including recess 5-1 and second end rib 6 in each blade section 2;3 defines a cavity 8 which is arranged for receiving the connection beam 7.

The connection beam 7 has been shown separately from the blade sections 2;3. However, in assembled state of the sectional blade 1 connection beam 7 is arranged in the cavities 8 of both blade sections 2;3. In assembled state of the sectional blade 1 connection beam 7 together with end ribs 5;6 functions as a first load carrying path.

In assembled state of the sectional blade 1 the second end ribs 6 are preferably also connected by rods 9, which rods functions as a second load carrying path. The rods 9 are inserted in predetermined holes in both second end ribs 6 and are secured, preferably bolted, at the outer sides of the blade sections 2;3. The squared tubes or channels 10, which are located between the first rib 5 and second rib 6 of each blade section 2;3 do not have a load carrying function in normal operation, but serve as crushing zones in failsafe operation. In order to act as crushing zones, the tubes or channels 10 are preferably glass fiber rods. More preferably, in order to further absorb crushing forces acting on the tubes or channels 10, these tubes or channels 10 also comprises one or more crushing busses of metal. These tubes further function for handling/processing purposes.

The second load carrying path carries centrifugal loads and acts as a failsafe system wherein the centrifugal rods 9 avoid the tip part (blade section 3) of the sectional blade 1 coming out of radial position thus suppressing the radial movement of the blade section 3 relative to blade section 2.

As mentioned above, the connecting beam 7 is hollow at both ends and is received by the rims 6-1 of both second end ribs 6. By connecting the inner surface of the hollow end 7-1 to the outer surface of rim 6-1 the blade section the moment load on the connection is distributed over the surface of both the rim 6-1 and the hollow end 7-1 together with the inner surface of end ribs 5.

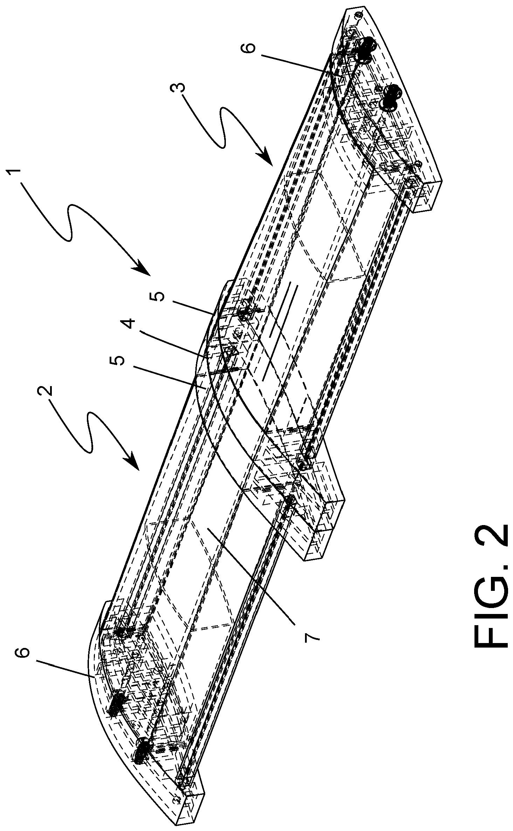

Figure 2 shows an isometric view of the sectional blade 1 according to Figure 1, wherein the connecting beam 7 is installed in both the cavity of the first and second blade section 2;3. In this figure, all parts of the sectional blade are shown transparent in order to show the location of the connection beam 7.

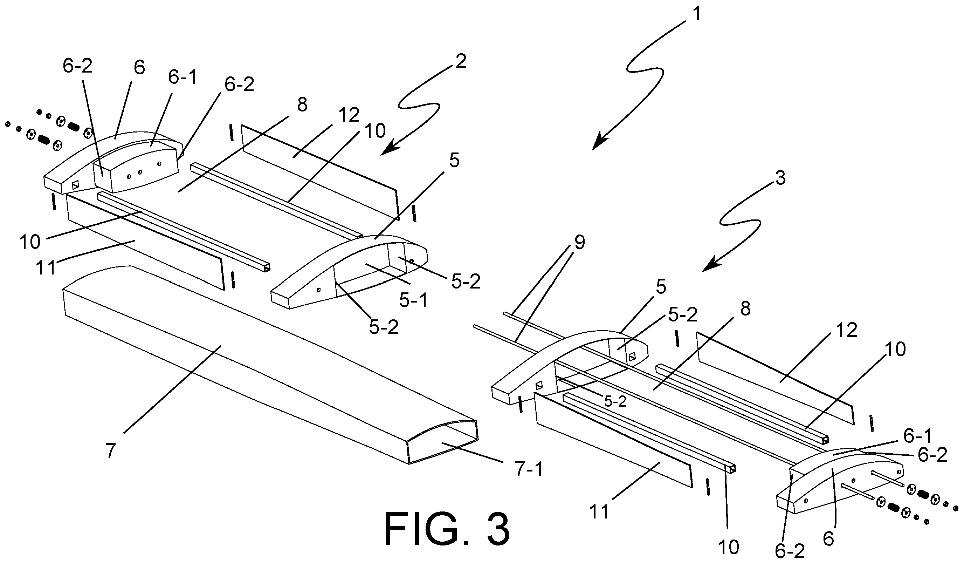

Figure 3 shows an exploded view of the sectional blade 1 according to Figure 1 and Figure 2. Two flat webs 11; 12 are positioned substantially traverse to the longitudinal plane of each blade section 2;3. The webs 11; 12 lie more to the center of each blade section 2;3 than the tube or channels 10. The webs 11; 12 are at one end structurally attached near a side wall 6-2 of the rim 6-1 of each second end rib 6. The webs 11; 12 are at the second end structurally attached to near a surface 5-2 near the opening 5-2 of each first end rib 5. The positioned webs 11; 12 form part of a wall of the cavity 8 for form fittingly receiving the connection beam 7. Preferably the webs 11; 12 follow the outer shape of top and bottom part of the blade section 2;3.

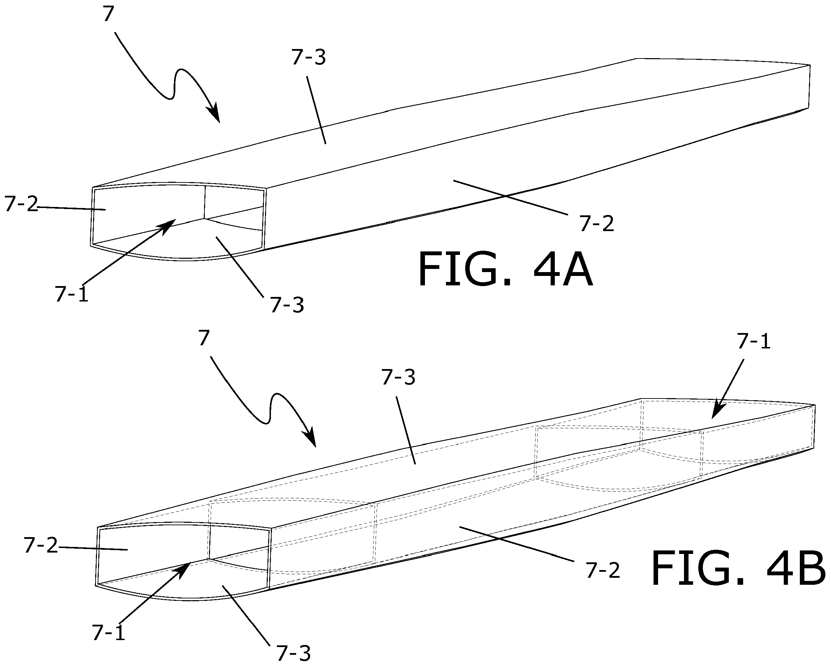

Figure 4A and 4B show the connection beam 7 in more detail, wherein in Figure 4B the connection beam is shown transparent. The connection beam or shaft 7 is preferably made of four elongated side walls 7-2;7-3, which are positioned such to form a box like structure. The side walls 7-2 are preferably flat and are to be positioned next to the webs 11;12 of the cavity 8 in each blade section 2;3. The elongated side walls 7-2;7-3 are preferably prefabricated UD girders. This has the advantage that the needed longitudinal stiffness and strength can be adjusted. Also the material of the girders can be changed. Preferably a biaxial material is applied circumferentially to the elongated side walls 7-2;7-3 in order to create a proper stiff torsion box. Preferably an epoxy, polyester, vinylester of PU resin impregnated glass or carbon fiber is applied. Again the type and amount of material used can be tailored to the needed site specific torsional load bearing capabilities.

The prefab girders 7-2;7-3 and the circumferentially applied biaxial material result in a modular wrinkle free connection beam or shaft for use within the modular split joint design of the sectional blade.

The load from the tip of second blade section 3 is preferably transferred to the inner blade section 2 by means of the end ribs. During installation of the sectional blade, the side walls 7-2;7-3 are preferably bonded to the girders of the blade (not shown in the figures) and can function as a third load carrying path.

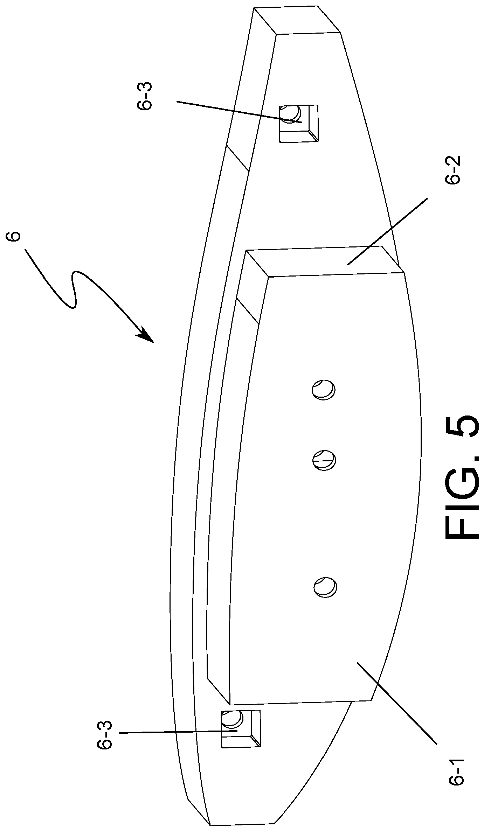

Figure 5 shows the second end rib 6 in more detail. The second end rib 6 has an outer profile that follows a cross-sectional inner shape of the sectional blade. The second end rib has a complex three dimensional shape, like the rim 6-1, the flat side walls 6-2, the squared recesses 6-3 and the through holes. It is therefore expensive to manufacture. Traditionally, a person skilled in the art would mill the second end rib 6 from a solid piece of material. The present invention is directed to a different method of manufacturing the second end rib 6. The complex 3D shape of the second end rib 6 is simplified by 2D standard available slices that are water jet cut. Typical slice material is glass fiber epoxy or polyester. Typical thickness of the material is 10 to 50 millimeter. After manufacturing the slices are composed together by bonding or bolting to form the complex 3D shaped second end rib 6.

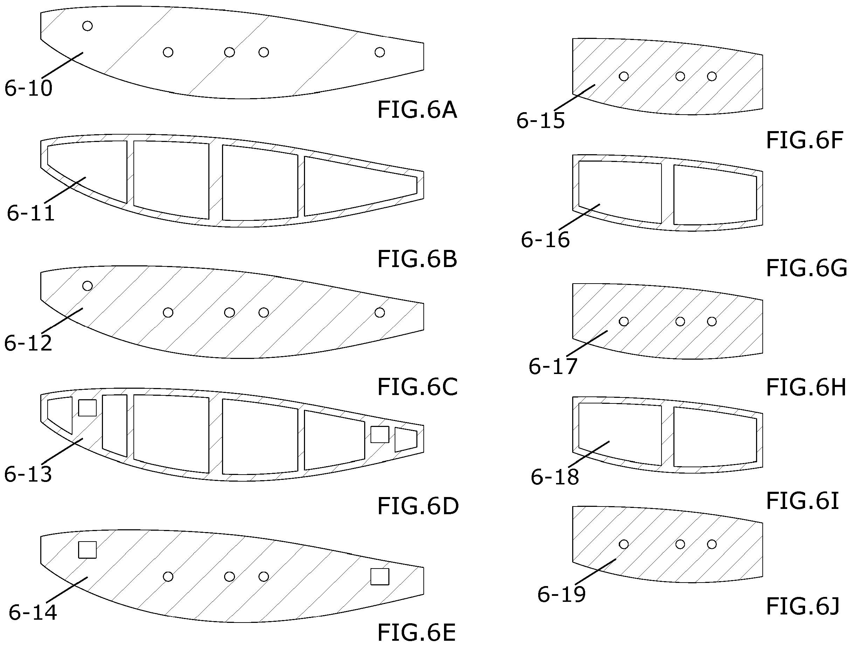

Figure 6A;..;6J shows the different slices that are water jet cutted out of plate material that are part of the modular second end rib 6. Slices 6-10;... ;6-14 form the outer side of the second end rib 6. Slices 6-15;...;6-19 form the rim positioned on the outer side of the second end 6.

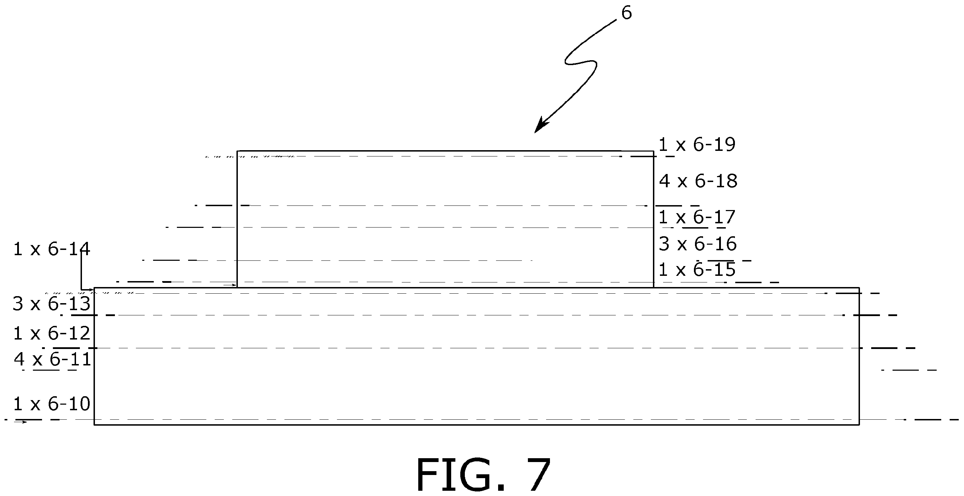

Figure 7 shows a side view of the second end rib 6, wherein the layers or slices as shown in Figure 6A;..;6J are stacked together. The slices 6-10;..;6-19 vary in thickness and depend on the actual loads on the side. The shown method for manufacturing an end rib 5;6 allows for adaptive, cheaper and faster manufacturing of this component of the sectional blade and can also be introduced for producing ribs for traditional blade designs. The shown method also allows for rapid prototyping.

The manufacturing of the second end rib 6 as shown in Figure 5, 6 and 7 and as described above can also be used accordingly for producing the first end rib 5 and intermediate ribs. Intermediate ribs are not shown in the figures.

The design of the sectional blade according to the invention is made modular. Within the modular design, the load carrying components are adaptive. The design and manufacturing process is therefore setup in such a way that it can be altered in a swift and cost-effective manner.

The sectional blade for a wind turbine, connection beam and end rib for the sectional blade and method for manufacturing the connection beam and the end rib according to the invention are expressly not limited to the shown embodiment but extends to all conceivable embodiments falling within the following claims.

## Claims

1. Sectional blade (1) for a wind turbine, comprising at least a first blade section (2) and a second blade section (3), which blade sections (2;3) extend in opposite direction from a blade joint (4), wherein each blade section (2;3) comprises a cavity (8) in longitudinal direction, wherein the first blade section (2) and second blade section (3) are structurally connectable by at least one connecting beam (7) or spar bridge which beam (7) extends in the cavities (8) of both blade sections (2;3), wherein each blade section (2;3) is at its first end near the blade joint (4) provided with a first end rib (5) and each blade section (2;3) is at its second end provided with a second end rib (6), wherein the first and second end rib (5;6) each have a shape which cooperates with the blade section, the connecting beam (7) is hollow at both ends and wherein the second end rib (6) is arranged for receiving the hollow end (7-1)of the connecting beam (7) for structurally connecting the connecting beam (7) to the blade section, **characterized in that** a rim (6-1) is provided on the second end rib (6), which rim (6-1) is arranged for durable attachment of the inner side of the hollow end (7-1) of the connecting beam (7) and the first end rib (5) is provided with an opening (5-1) for partial passing of the connecting beam (7), wherein the rim of the opening (5-1) and the connecting beam (7) are arranged for durable attachment to each other.

2. Sectional blade (1) according to claim 1, **characterized in that** the second end ribs (6) in adjacent blade sections (2;3) are arranged for structurally connecting to each other by one or more rods (9), and the first end rib (5) is arranged for passing through each of the rods (9).

3. Sectional blade (1) according any of the foregoing claims, wherein the first and second end rib (5;6) of a blade section (2;3) are connected to each other by two flat webs (11; 12), that are positioned substantially traverse to the longitudinal plane of the blade section (2;3) and wherein the inner side of the webs (11;12) form side walls of the cavity (8).

4. Sectional blade (1) according any of the foregoing claims, comprising squared tubes or channels (10), which are located between the first rib (5) and second rib (6) of each blade section (2;3).

5. Connecting beam (7) for use in a sectional blade (1) for a wind turbine according to any of the foregoing claims, wherein the connecting beam (7) is formed by four beam-shaped longitudinal sides (7-2;7-3), which are structurally attached to each other.

6. Connecting beam (7) according to claim 5, wherein the longitudinal sides or girders (7-2;7-3) are fabricated from UD fibers impregnated with resin, wherein the girders are interconnected by multi axial fibers impregnated with resin.

7. Connecting beam (7) according to claim 6, wherein the resin is of the type epoxy, polyester, vinylester, or PU and the fibers are of the type glass fiber or carbon fiber.

8. End rib (5;6) for application in a wind turbine blade (1) according to any of claims 1-4, wherein the end rib (5;6) is composed of plates which are durable connected to each other.

9. Method for producing the end rib (5;6) according to claim 8, whereby the method comprises the following steps:
a). Splitting the overall design of the end rib (5;6) in multiple layers (6-10;... ;6-19) with a predetermined thickness;
b). Cutting each layer from a predetermined sheet material;
c). Connecting the layers (6-10;... ;6-19) to each other.

10. Method according to claim 9, whereby in step b) each layer (6-10;... ;6-19) is cut from a sheet material using water jet cutting techniques.

11. Method according to claim 9 or 10, whereby the sheet material is composed of one of the following materials: glass fiber with epoxy resin, polyester resin, vinyl ester resin or PU resin.

12. Method according to claim 9 or 10, whereby subsequent layers (6-10;... ;6-19) are connected to each other by bonding.

## Patentansprüche

1. Segmentierte Schaufel (1) für eine Windkraftanlage, umfassend mindestens einen ersten Schaufelabschnitt (2) und einen zweiten Schaufelabschnitt (3), wobei die Schaufelabschnitte (2;3) sich in entgegengesetzter Richtung von einer Schaufelverbindung (4) erstrecken, wobei jeder Schaufelabschnitt (2;3) in Längsrichtung einen Hohlraum (8) aufweist, wobei der erste Schaufelabschnitt (2) und der zweite Schaufelabschnitt (3) durch mindestens einen Verbindungsbalken (7) oder eine Holmbrücke strukturell verbindbar sind, wobei sich der Balken (7) in die Hohlräume (8) beider Schaufelabschnitte (2;3) erstreckt, wobei jeder Schaufelabschnitt (2; 3) an seinem ersten Ende nahe der Schaufelverbindung (4) mit einer ersten Endrippe (5) versehen ist und jeder Schaufelabschnitt (2;3) an seinem zweiten Ende mit einer zweiten Endrippe (6) versehen ist, wobei die erste und die zweite Endrippe (5;6) jeweils eine Form aufweisen, die mit dem Schaufelabschnitt zusammenwirkt, der Verbindungsbalken (7) an beiden Enden hohl ist und wobei die zweite Endrippe (6) zur Aufnahme des hohlen Endes (7-1) des Verbindungsbalkens (7) ausgebildet ist, um den Verbindungsbalken (7) mit dem Schaufelabschnitt strukturell zu verbinden, **dadurch gekennzeichnet, dass** an der zweiten Endrippe (6) ein Bund (6-1) vorgesehen ist, der zur dauerhaften Befestigung der Innenseite des hohlen Endes (7-1) des Verbindungsbalkens (7) angeordnet ist und die erste Endrippe (5) mit einer Öffnung (5-1) zum teilweisen Durchtritt des Verbindungsbalkens (7) versehen ist, wobei der Bund der Öffnung (5-1) und der Verbindungsbalken (7) zur dauerhaften Befestigung aneinander ausgebildet sind.

2. Segmentierte Schaufel (1) nach Anspruch 1, **dadurch gekennzeichnet, dass** die zweiten Endrippen (6) in benachbarten Schaufelabschnitten (2;3) ausgebildet sind, um sie durch einen oder mehrere Stäbe (9) strukturell miteinander zu verbinden, und die erste Endrippe (5) so angeordnet ist, dass sie durch jeden der Stäbe (9) hindurchgeht.

3. Segmentierte Schaufel (1) nach einem der vorhergehenden Ansprüche, wobei die erste und zweite Endrippe (5; 6) eines Schaufelabschnitts (2;3) durch zwei flache Leisten (11;12) miteinander verbunden sind, die im Wesentlichen quer zur Längsebene des Schaufelabschnitts (2; 3) angeordnet sind und wobei die Innenseite der Leisten (11;12) Seitenwände des Hohlraumes (8) bilden.

4. Segmentierte Schaufel (1) nach einem der vorangehenden Ansprüche, umfassend quadratische Rohre oder Kanäle (10), die zwischen der ersten Rippe (5) und der zweiten Rippe (6) jedes Schaufelabschnitts (2;3) angeordnet sind.

5. Verbindungsbalken (7) zur Verwendung in einer segmentierten Schaufel (1) für eine Windkraftanlage nach einem der vorhergehenden Ansprüche, wobei der Verbindungsbalken (7) durch vier balkenförmige Längsseiten (7-2;7-3) gebildet ist, die strukturell miteinander verbunden sind.

6. Verbindungsbalken (7) nach Anspruch 5, wobei die Längsseiten oder -träger (7-2;7-3) aus mit Harz imprägnierten UD-Fasern hergestellt sind, wobei die Träger durch mit Harz imprägnierte Multiaxialfasern miteinander verbunden sind.

7. Verbindungsbalken (7) nach Anspruch 6, wobei das Harz vom Typ Epoxid, Polyester, Vinylester oder PU ist und die Fasern vom Typ Glasfaser oder Kohlefaser sind.

8. Endrippe (5;6) zur Anwendung in einer Windturbinenschaufel (1) nach einem der Ansprüche 1-4, wobei die Endrippe (5;6) aus Platten besteht, die dauerhaft miteinander verbunden sind.

9. Verfahren zur Herstellung der Endrippe (5;6) nach Anspruch 8, wobei das Verfahren die folgenden Schritte umfasst:
a). Aufteilen der Gesamtkonstruktion der Endrippe (5; 6) in mehrere Schichten (6-10;...;6-19) mit einer vorgegebenen Dicke;
b). Schneiden jeder Schicht aus einem vorbestimmten Plattenmaterial;
c). Verbinden der Lagen (6-10;...;6-19) miteinander.

10. Verfahren nach Anspruch 9, wobei in Schritt b) die Schichten (6-10;...;6-19) mit Hilfe von Wasserstrahlschneidetechniken aus einem Plattenmaterial geschnitten werden.

11. Verfahren nach Anspruch 9 oder 10, wobei das Folienmaterial aus einem der folgenden Materialien besteht: Glasfaser mit Epoxidharz, Polyesterharz, Vinylesterharz oder PU-Harz.

12. Verfahren nach Anspruch 9 oder 10, wobei aufeinanderfolgende Schichten (6-10;... ;6-19) durch Verkleben miteinander verbunden werden.

## Revendications

1. Pale sectionnelle (1) pour une éolienne, comprenant au moins une première section de pale (2) et une deuxième section de pale (3), lesquelles sections de pale (2 ; 3) s'étendent dans des directions opposées à partir d'un joint de pale (4), chaque section de pale (2 ; 3) comprenant une cavité (8) dans la direction longitudinale, la première section de pale (2) et la deuxième section de pale (3) pouvant être reliées structurellement par au moins une poutre de liaison (7) ou un pont à longeron, laquelle poutre (7) s'étend dans les cavités (8) des deux sections de pale (2 ; 3), chaque section de pale (2 ; 3) étant, à sa première extrémité proche du joint de pale (4), pourvue d'une première nervure d'extrémité (5) et chaque section de pale (2 ; 3) étant, à sa deuxième extrémité, pourvue d'une deuxième nervure d'extrémité (6), la première et la deuxième nervure d'extrémité (5 ; 6) ayant chacune une forme qui coopère avec la section de la pale, la poutre de connexion (7) étant creuse aux deux extrémités et la deuxième nervure d'extrémité (6) étant conçue pour recevoir l'extrémité creuse (7-1) de la poutre de connexion (7) en vue de connecter structurellement la poutre de connexion (7) à la section de pale, **caractérisée en ce qu'**un rebord (6-1) est prévu sur la deuxième nervure d'extrémité (6), lequel rebord (6-1) est conçu pour la fixation durable du côté intérieur de l'extrémité creuse (7-1) de la poutre de liaison (7), et la première nervure d'extrémité (5) est pourvue d'une ouverture (5-1) pour le passage partiel de la poutre de liaison (7), le rebord de l'ouverture (5-1) et la poutre de liaison (7) étant conçus pour une fixation durable l'un à l'autre.

2. Pale sectionnelle (1) selon la revendication 1, **caractérisée en ce que** les deuxièmes nervures d'extrémité (6) dans des sections de pale adjacentes (2 ; 3) sont conçues pour être structurellement reliées les unes aux autres par une ou plusieurs tiges (9), et la première nervure d'extrémité (5) est conçue pour laisser passer chacune des tiges (9).

3. Pale sectionnelle (1) selon l'une quelconque des revendications précédentes, dans laquelle la première et la deuxième nervure d'extrémité (5 ; 6) d'une section de pale (2 ; 3) sont reliées l'une à l'autre par deux âmes plates (11 ; 12), qui sont positionnées sensiblement transversalement au plan longitudinal de la section de pale (2 ; 3), et le côté intérieur des âmes (11 ; 12) formant des parois latérales de la cavité (8).

4. Pale sectionnelle (1) selon l'une quelconque des revendications précédentes, comprenant des tubes ou canaux carrés (10), qui sont situés entre la première nervure (5) et la deuxième nervure (6) de chaque section de pale (2 ; 3).

5. Poutre de connexion (7) pour une utilisation dans une pale sectionnelle (1) pour une éolienne selon l'une quelconque des revendications précédentes, la poutre de connexion (7) étant formée par quatre côtés longitudinaux en forme de poutre (7-2 ; 7-3), qui sont structurellement attachés les uns aux autres.

6. Poutre de connexion (7) selon la revendication 5, dans laquelle les côtés longitudinaux ou poutres (7-2 ; 7-3) sont fabriqués à partir de fibres UD imprégnées de résine, les poutres étant interconnectées par des fibres multiaxiales imprégnées de résine.

7. Poutre de connexion (7) selon la revendication 6, dans laquelle la résine est du type époxy, polyester, ester de vinyle ou PU, et les fibres sont du type fibre de verre ou fibre de carbone.

8. Nervure d'extrémité (5 ; 6) pour une application dans une pale d'éolienne (1) selon l'une quelconque des revendications 1-4, dans laquelle la nervure d'extrémité (5 ; 6) est composée de plaques qui sont reliées entre elles de manière durable.

9. Procédé de fabrication de la nervure d'extrémité (5 ; 6) selon la revendication 8, le procédé comprenant les étapes suivantes :
a) Division de la conception globale de la nervure d'extrémité (5 ; 6) en plusieurs couches (6-10 ; ... ; 6-19) avec une épaisseur prédéterminée ;
b) Découpage de chaque couche à partir d'un matériau en feuille prédéterminé ;
c) Liaison des couches (6-10 ; ... ; 6-19) les unes aux autres.

10. Procédé selon la revendication 9, dans lequel, à l'étape b), chaque couche (6-10 ; ... ;6-19) est découpée dans un matériau en feuille en utilisant des techniques de découpe par jet d'eau.

11. Procédé selon la revendication 9 ou 10, dans lequel le matériau en feuille est composé de l'un des matériaux suivants : fibre de verre avec résine époxy, résine polyester, résine d'ester de vinyle ou résine PU.

12. Procédé selon la revendication 9 ou 10, dans lequel les couches successives (6-10 ; ... ; 6-19) sont reliées les unes aux autres par collage.
